Europäisches Patentamt

European Patent Office

Office européen des brevets

(19)

(11) Publication number: **0 050 198**
**B1**

(12) **EUROPEAN PATENT SPECIFICATION**

(45) Date of publication of patent specification: **09.01.85**

(51) Int. Cl.⁴: **G 06 K 7/015,** G 06 K 1/12

(21) Application number: **81106429.4**

(22) Date of filing: **19.08.81**

(54) Method of checking the accuracy of bar code information.

(30) Priority: **20.10.80 US 198337**
**20.10.80 US 198311**

(43) Date of publication of application:
**28.04.82 Bulletin 82/17**

(45) Publication of the grant of the patent:
**09.01.85 Bulletin 85/02**

(84) Designated Contracting States:
**DE FR GB IT**

(56) References cited:
**DE-A-2 335 736**
**DE-B-1 051 293**
**US-A-3 818 189**

**IBM TECHNICAL DISCLOSURE BULLETIN, vol.
1, no. 1, June 1958 ARMONK, N.Y. (US) F.K.
ALLEN: "Skew Compensator" page 4**
**IBM TECHNICAL DISCLOSURE BULLETIN, vol.
20, no. 4, September 1977 ARMONK, N.Y. (US)
A.J. DATTILO et al.: "Scanning Typewritter"
page 1299**

(73) Proprietor: **International Business Machines
Corporation
Old Orchard Road
Armonk, N.Y. 10504 (US)**

(72) Inventor: **Flurry, Gregory Alan
16-2 Foxwood, Dr.
Pleasantville, NY 10570 (US)**
Inventor: **Krieg, Michael LeRoy
316 Taylor Dr.
Lexington, KY 40505 (US)**
Inventor: **Phillips, David Wharton
1280 Devonport Dr.
Lexington, KY 40504 (US)**
Inventor: **Bobart, Kevin Lee
525 Mt. Tabor Rd.
Lexington, KY 40520 (US)**

(74) Representative: **Vekemans, André
COMPAGNIE IBM FRANCE Département de
Propriété Industrielle
F-06610 La Gaude (FR)**

Courier Press, Leamington Spa, England.·

## Description

This invention relates to bar codes in connection with alignment marks. The bar code is an arbitrary group of lines whose meaning depends on their width, spacing or the like when traversed by a scanner. The alignment marks is used to position the scanner with respect to the bar code.

Bar codes are commonly known in various forms and are characterized by their capability of recording information which can be recovered by a single pass along a line by a scanning device. Typically, bar codes are a series of vertical marks which carry information by their varying widths, by the varying spacing between marks, or by both.

The dimensions of bar codes in the direction perpendicular to the scan have significance generally only to assure that the scan observes the code. Typically, positioning of the scanner can be assured only within a certain range of accuracy and the perpendicular dimension of the bar code must be at least broad enough to assure that the scanner observes the code when it is positioned anywhere within the range of accuracy. The positioning of the scanner can be so variable that the bar code must be quite broad.

To reduce the breadth of a bar code and the consequent space used for printing, it is desirable to improve the precision of positioning the scanner. It is known generally in the scanning art to employ a separate mark as a guide or alignment reference which is sensed by the scanner and from which it is more precisely positioned with respect to the code to be sensed.

Where such an alignment mark is preprinted or printed in some manner not integral with the printing of the bar code information, such a use of an alignment or register mark is believed to be conventional and within the sate of the art. U.S.—A—3,433,933 is exemplary of such prior art. It teaches a narrow vertical line as an alignment mark, which is sensed to define a scan line through a column containing horizontal marks. The alignment mark in the preferred form of the instant invention is relatively wide. Although no direct alignment occurs off the mark in the following publication, it is cited because it differs from the cited patent in that the mark is relatively wide. That publication is the following: "Optical Mark Sensing of Single-Color Documents", by W. B. Plummer, *IBM Technical Disclosure* Bulletin, Vol 19, No. 8, January 1977 at page 3174.

On the other hand it is known from IBM Technical Disclosure Bulletin, Volume 20, No. 4 September 1977, page 1299, "Scanning Typewriter" by Datillo and Queener to use a scanner to check a line just printed, albeit a line of alpha numeric characters.

The instant subject matter differs fundamentally from known prior art in that the alignment mark is printed with the printing of the bar code information. In the preferred mode, rather than being a narrow line, the alignment mark is both substantially wide and thick. With the printing of the alignment mark by the printer itself prior to printing the bar code information, the instant subject matter employs a scanning of the alignment mark to define a relationship between the printer and the scanner subsequently used to position the print head for rereading the printed bar code information for checking its accuracy.

According to the invention there is provided a method of checking the accuracy of bar code information printed on a medium by a printer, said printer incorporating a print head and a scanner both mounted on a carrier, and control means for printing on said medium both lines of bar code information having separated bars and an elongated alignment symbol whose length is parallel to the lines of bar code information and extends at least the width of several of said bars, said method comprising carrying out the following steps in the following order:

— printing said alignment symbol on said medium with said print head,

— moving said medium and said carrier relatively to each other perpendicularly to the length of said alignment symbol,

— detecting the location of at least one edge of said symbol with said scanner,

— determining a correction factor based on the distance between the location of printing of said symbol and the location of said symbol as detected by said scanner,

— supplying said control means with predetermined patterns of bar code information to be printed on said medium,

— activating said control means to effect printing of a line of said predetermined patterns of bar code information on said medium,

— positioning said scanner by means of said correction factor generally near the central axis of the line of bar code information just printed

— reading said line of bar code information with said scanner, and

— checking the accuracy of the line of bar code information just read.

Fig. 1 illustrates an ordinary paper carrying bar code information and an alignment mark.

Fig. 2 is illustrative of the overall system.

Fig. 3a and Fig. 3b are a flow diagram of the compensation factor determination.

Fig. 4a and 4b are a flow diagram of the reading sequence employing the alignment mark.

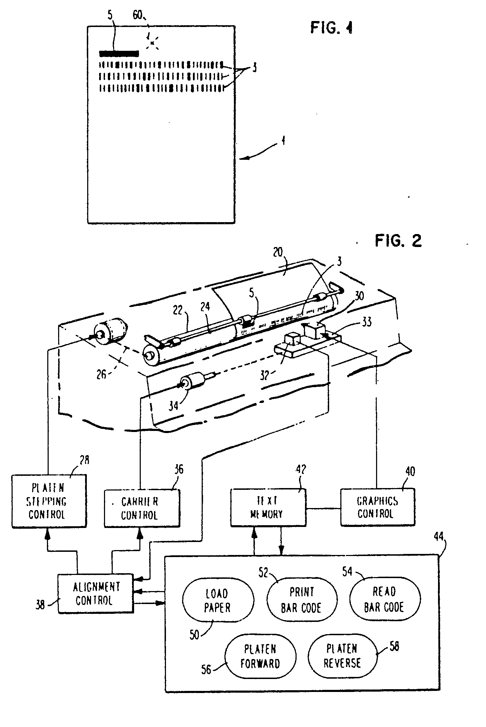

Fig. 1 shows a paper carrying bar code information 3 which may be in several parallel lines of different width as shown. Above that coded information is a horizontal alignment mark 5 in accordance with this invention, which is a solid rectangular mark printed along with the bar code information 3. The alignment mark is printed by the same printer which prints the bar code information 3.

Fig. 2 illustrates an operative system, which is under semi-automatic control. The printing elements and control hardware are basically conventional. A sheet of paper 20 to be printed upon, which is typically ordinary letter paper, is mounted against a platen 22, where it is held by bail 24. Paper 20 is moved longitudinally by platen drive 26, under control of platen stepping control 28.

Paper 20 is traversed horizontally by print head 30, which may be preferably a part of an ink jet or matrix printer, and by optical scanner 32. Print head 30 and scanner 32 are mounted on a carrier 33 and are moved together by carrier drive 34 under control of carrier control 36.

The specific designs of print head 30 and optical scanner 32 form no part of this invention. An ink jet printer of any standard design is inherently well suited to print the solid rectangle of alignment mark 5 and the vertical bars of different widths which make up a typical bar code 3. Scanner designs typically incorporate a light source and a photoconductor in an optical path by which light is trained upon and the reflections are received from a small area being observed. For most purposes, only reflections from a limited, pre-defined area are passed to the photoconductor. In the preferred embodiment this is accomplished by an opaque screen having an opening, which is 0.76 mm in height and 0.076 mm in width.

The vertical bars 3 and alignment mark 5 are each approximately 1.739 mm in height. Platen 22 is stepped in increments of 0.264 mm. Movement of carrier 33 is measured in increments of 0.105 mm, while the drive is by a DC motor and uninterrupted. Indexing of platen 22 may be uninterrupted where movement of more than one increment is directed. When the movement of both platen 22 and carrier 33 is stopped, the final position is defined by the number of increments traversed. Such incremental position systems are well known in graphics and printing systems, and their details form no part of this invention and will not be described.

In the preferred embodiment of this invention, position of the paper 20 relative to print head 30 and optical scanner 32 is monitored by storage in memory of a start position followed by counting of increments of indexing both positively and negatively. Although separate counting circuits and hardware logic could be provided, the preferred embodiment employs a general purpose microprocessor for control and implementation of the steps involved. This element is shown symbolically in Fig. 2 as alignment control 38. Print head 30 is additionally under control of a microprocessor, shown symbolically as graphics control 40, to define the pattern of printing applied to paper 20. Graphics control 40 may be any state-of-the-art system for printing characters and pre-defined special symbols such as the alignment mark.

The text to be printed in bar code typically will be the contents of magnetic or other memory, shown as text memory 42. Although such text can be generated contemporaneously with its recording in bar code as will be described, usually it is generated in a full line or page and is proof read and revised as necessary prior to being taken from memory 42 to be printed in bar code.

Finally, Fig. 2 shows illustratively the manual key operations related to the subject invention of bar code printing with alignment mark. The operator control panel or keyboard 44 is shown illustratively. Loading of paper 20 on platen 22 may be manual. Where it is automatic, the operator manually operates the load paper key 50. With paper· loaded, the machine will typically go through an automatic scan across the platen 22 from left of where paper 20 could be to past the right margin of paper 20. The left and right margins of paper 20 are observed by optical scanner 32 and defined in position and stored in alignment control 38. Alternatively, the paper 20 may simply be loaded at or within predefined points on platen 22 and the location of the edges of paper 20 will then be known, predetermined factors in control 38.

Paper 20 may be loaded for use in either of two modes, to print bar code 3 or to read bar code 3 from a paper which carries bar code 3 in accordance with this invention. For printing, paper 20 is typically blank, and the operator manually operates print bar code key 52. Information in text memory 42 will then be printed, along with the alignment mark as will be described below. For reading bar code, the operator manually locates scanner 32 higher than alignment mark 5 and manually operates read text key 54. The printing mode will first be described in detail.

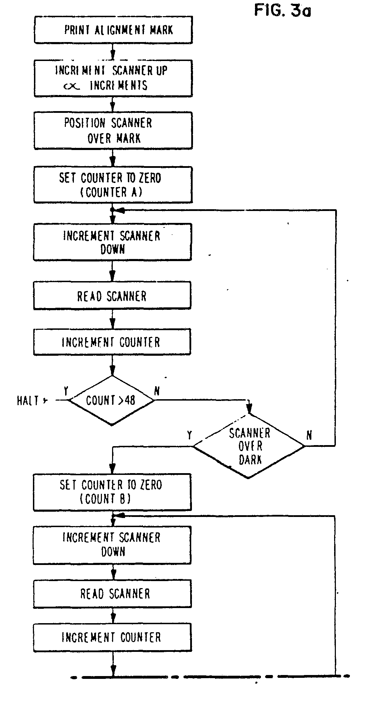

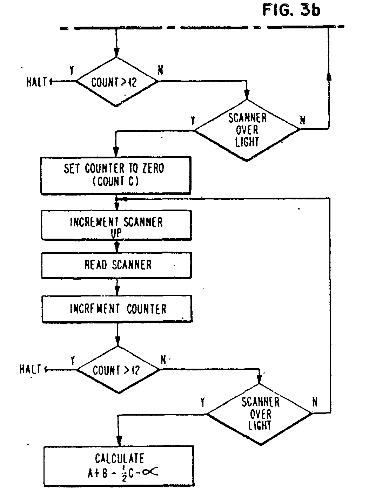

With paper 20 loaded on platen 22, operation of print bar code key 52 initiates further activity automatically with the sequence directed by alignment control 38. Initially, carrier 33 is brought to the predefined left printing margin by carrier drive 34 controlled by carrier control 36. The subsequent sequence is illustrated in Fig. 3a and 3b. Alignment mark 5, a solid rectangular character 1.739 mm in height and 50.8 mm in width is printed by print head 30 and with the pattern defined by graphics control 40 as carrier 33 moves uninterrupted across the paper 20.

After alignment mark 5 is printed, without operator intervention, optical scanner 32 is centered over mark 5. Carrier 33 is first moved by control 38 upward a predetermined number of increments by platen drive 26 through platen stepping control 28. In the specific embodiment drive 26 is incremented eight times, each causing a movement of 0.264 mm. Control 38 then directs movement of carrier drive 34 through carrier control 36 to a point spaced the predetermined amount from the left margin of paper 20 at which the nominal or approximate center of mark 5 appears. In this way optical scanner 32 is positioned above alignment mark 5 without operator intervention.

Paper 20 is then indexed upward by platen drive 26 under stepping control 28. A counter in control 38 is set to zero and each index step is counted as alignment mark 5 is brought upward toward optical scanner 32. This is denominated Count A.

The purpose of this reading of alignment mark 5 before paper 20 is further printed upon is to define an effective vertical position difference between print head 30 and scanner 32. Even though they are mounted on carrier 33 to have the same effective vertical position, in practice variations occur. The present reading operation is to define a compensation factor for that difference.

Ideally, this compensation factor can be defined by a single scan through alignment mark 5. Thus, in this ideal situation, platen drive 26 is indexed until optical scanner 32 passes from the white of paper to the dark of mark 5. As indicated, the light-path opening of scanner 32 is 0.762 mm high, almost one half of the height of mark 5. At a certain point, generally several increments after the light-path opening encounters some dark of mark 5, enough light will be blocked that the optical system will recognize dark. Count A is then completed and stored in alignment control 38. The counter is reset to zero and a new count, Count B, is begun, also of increments of platen drive 26 as paper 20 is continued to be moved vertically. At a certain point of scanner 32 being over white paper on the bottomside of mark 5, the optical system will recognize light. Count B is then completed and stored in alignment control 38. (It will be clear that the 0.762 mm high light-path opening may respond to mark 5 either to show the mark larger or smaller than it actually is, depending upon the sensitivity of the photoconductor involved. This will be the same at both the top and bottom of mark 5 and therefore will not shift the effective center indicated for mark 5).

In this theoretical situation, including the assumption that scanner 32 responds at or an equal distance from the top and the bottom of mark 5, the compensation factor is defined as follows: Count A + 1/2 Count B − Upward Increments, the Upward Increments being those of the predetermined upward shift of the carrier taken immediately after mark 5 is printed, denominated $\alpha$ in the flow diagram. Where the compensation factor is negative, platen 22 must be indexed downward by the number of steps of the compensation factor from the position platen 22 was in when the line to be read was printed. The compensation factor is the product of a recognition that a line printed with the platen 22 at one position possibly must be scanned, for center scanning, with the platen 22 at a somewhat different position.

In the actual preferred implementation, for reasons not essentially related to this invention, the circuits responding to scanner 32 are not highly reliable at the initial transition from white to dark. For that reason the preferred implementation is somewhat more complicated than the ideal discussed, as is discussed below and shown in Fig. 3a and 3b.

The upward increments and the Count A and Count B are as described. The sum of Count A and Count B is recognized as accurate only as defining the total increments from the start to the lower edge of mark 5 as it is responded to by scanner 32. When the lower edge of mark 5 is sensed and Count B terminated, the platen drive 26 is reversed. The total of Count B is stored in alignment control 38. The counter is reset to zero and a new count, Count C, is begun, also of increments of platen drive 26, but paper 20 is moved downward.

At a certain location of scanner 32 over white paper on the top side of mark 5, the optical system will recognize light. Count C is then completed and stored in alignment control 38. The compensation factor is defined as follows: Count A + Count B − 1/2 Count C − Upward Increments. This factor is computed and stored by alignment control 38. As with the theoretical formula, when the compensation factor is negative, platen 22 is to be indexed downward (reversed) by the number of steps of the compensation factor from the position platen 22 was in when the line to be read was printed. When the factor is positive, platen 22 is to be indexed upward (forward).

The compensation factor is then used in the reading for error check while paper 20 remains in the machine after bar code 3 is printed. When a line of bar code 3 is printed, the line is immediately read by scanner 32 and compared with the corresponding part of text memory 42 for errors. Prior to each such reading, platen 22 is indexed by the compensation factor, so that the line of bar code 3 is traversed with scanner 32 centered on bar code 3. After such reading, when the platen 22 is indexed to print a new line, indexing in the opposite sense to the previous compensation factor is included.

Reference to the flow diagram of Fig. 3a and 3b shows that the automatic operation is halted if Count A becomes greater than 48, if Count B becomes greater than 12, or if Count C becomes greater than 12. Such increments indicate total distances so much greater than the dimensions involved that the system is established as not operating for the purpose intended.

Regardless of whether the compensating factor for error check just described is practiced, the alignment mark 5, printed as part of the printing of bar code 3, functions as a basic element in reading of bar code 3. Fig. 1 illustrates a typical page carrying printing of several lines of the bar code 3, with the alignment mark 5 at the top.

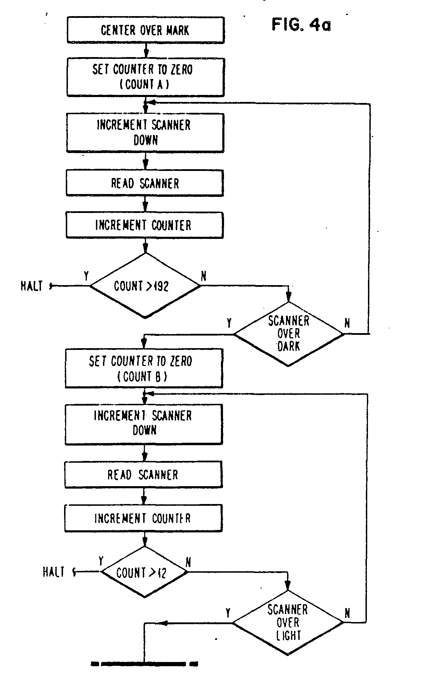

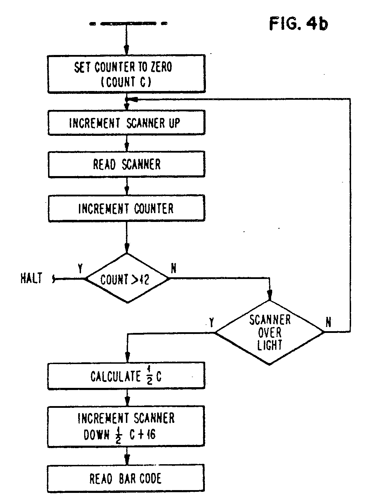

For reading, the operator manually steps platen 22, by use of a platen forward key or control 56 and a platen reverse key or control 58, to bring the carrier 33 above mark 5. Any vertical displacement of optical scanner 32 less than 192 increments is satisfactory, but, as will be described in connection with the flow diagram of Fig. 4a and 4b, the system is designed to recognize a longer displacement as an error condition. The dotted cross 60 in Fig. 1 indicates a point properly and sufficiently above mark 5.

The operator then manually operates a read bar code key 54. Further operation is automatic under control of alignment control 38. The first action is the centering of scanner 32 over mark 5. Control 38 directs movement of carrier drive 34 through carrier control 36 to a point spaced the predetermined amount from the left margin of paper 20 at which the nominal or approximate center of mark 5 will appear. This automatic sequence is shown as the first operation in the flow diagram in Fig. 4a (alignment mark 5 is 50.8 mm wide, which is more than enough to provide for imprecision in the actual system. Typically, an alignment mark four times as wide as the 1.739 mm height would function adequately).

After centering, the counter is set to zero, prior to the generation of Count A. Scanner 20 is moved effectively downward by platen drive 26 moving paper 20 on platen 22 forward under control of platen stepping control 28. Scanner 32 is read and the counter incremented until the scanner 32 senses the transition from light to dark. Count A is then completed and stored in alignment control 38. The counter is reset to zero and a new count, Count B, is begun, also of increments of platen drive 26 as paper 20 is continued to be moved upward. At a certain point of scanner 32 being over white paper on the bottom side of mark 5, the optical system will recognize light. Count B is then completed and stored in alignment control 38.

As discussed more fully in the foregoing treatment of the printing of bar code, optical scanner 32 has an effective opening 0.762 mm high. Thus, the response to mark 5 may show the mark larger or smaller than it actually is, depending upon the sensitivity of the photoconductor involved. The center of mark 5 will be accurately indicated.

As already mentioned, in the actual preferred implementation, for reasons not essentially related to this invention, the circuits responding to scanner 32 are not highly reliable at the initial transition from white to dark. For that reason, a third count, Count C, is made. The counter is reset to zero and paper 20 is moved downward by increments through platen drive 26. The increments step the counter to accumulate Count C.

At a certain location of scanner 32 over white paper on the top side of mark 5, the optical system will recognize light. Count C is then completed and stored in alignment control 38. One half of Count C is the calculated. Carrier 33 is moved that value plus 16 increments of platen drive 26 and reading of bar code is begun.

The value 16 is that of the pre-established displacement between the center of the alignment mark 5 and the first line of printed bar code information 3. The factor 1/2 Count C locates the center of mark 5. In a generalized formula, the factor 16 is replaced by the number of increments which the center of bar code is spaced vertically from the center of the alignment mark on the paper to be read.

Reference to the flow diagram of Fig. 4a and 4b shows that the automatic operation is halted if Count A becomes greater than 192, if Count B becomes greater than 12, or if Count C becomes greater than 12. Such increments indicate total distances so much greater than the dimension which should exist that the system is halted.

## Claims

1. Method of checking the accuracy of bar code information (3) printed on a medium (20) by a printer, said printer incorporating a print head (30) and a scanner (32) both mounted on a carrier (33), and control means (40) for printing on said medium (20) both lines of bar code information (3) have separated bars and an elongated alignment symbol (5) whose length is parallel to the lines of bar code information and extends at least the width of several of said bars, said method comprising carrying out the following steps in the following order:
— printing said alignment symbol (5) on said medium (20) with said print head (30),
— moving said medium (20) and said carrier (33) relatively to each other perpendicularly to the length of said alignment symbol (5),
— detecting the location of at least one edge of said symbol with said scanner,
— determining a correction factor based on the distance between the location of printing of said symbol (5) and the location of said symbol as detected by said scanner (32),
— supplying said control means (40) with predetermined patterns of bar code information to be printed on said medium (20),
— activating said control means (40) to effect printing of a line of said predetermined patterns of bar code information (3) on said medium (20),
— positioning said scanner (32) by means of said correction factor generally near the central axis of the line of bar code information just printed
— reading said line of bar code information (3) with said scanner (32), and
— checking the accuracy of the line of bar code information just read.

2. Method according to claim 1 wherein said moving and detecting steps include a relative movement between said medium (20) and said carrier (33) from a known starting position to a point where said scanner (32) detects a transition between the background and said alignment symbol, thus detecting a first edge of said symbol, said detection being used to provide a first measurement of distance A between said known starting position and said symbol (5).

3. Method according to claim 2 wherein said moving and detecting steps include a further relative movement between said medium (20) and said carrier (33) to a point where said scanner (32) detects a transition between alignment symbol (5) and background, thus detecting the second edge of said symbol, said detection being used to provide a second measurement of distance B between said first and said second edges of said symbol (5), said first and second measurements being used to compute said correction factor.

4. Method according to claim 3, wherein said moving step includes a first relative movement between said medium (20) and said scanner (32) in a first direction over a path of a predetermined length $\alpha$, thus defining said known starting position, then a second relative movement in the opposite direction during which are provided said first and second measurements of distances A and B, said values $\alpha$, A and B being used to compute said correction factor.

5. Method according to claim 4, wherein said relative movements are made by increments (positive or negative according to the direction) of predefined length, said method including the step of counting said increments, said value $\alpha$ being the number of increments during said first relative movement up to said known starting point, said value A being the number of increments between said known starting point and the point of detection of the first edge of said symbol (5), and said value B being the number of increments between the point of detection of said first edge and the point of detection of said second edge of said symbol (5).

6. Method according to any one of the preceding claims, wherein said bars are generally of equal height and the thickness of said alignment symbol is substantially the same as the height of said bars.

7. Method according to any one of the preceding claims wherein said moving step is performed by moving said medium (20) with respect to said carrier (33).

**Patentansprüche**

1. Verfahren zur Überprüfung der Genauigkeit von balkenkodierten Daten (3), die mit einem Drucker auf ein Medium (20) gedruckt werden, wobei der besagte Drucker einen Druckkopf (30) und eine Lesevorrichtung (32) enthält, die beide auf einen Wagen (33) montiert sind, sowie Prüfmittel (40) zum Drucken der Zeilen der balkenkodierten Daten (3) mit getrennten Balken und einem langgestreckten Ausrichtungssymbol (5), das in Längsrichtung parallel zu den Zeilen der balkenkodierten Daten liegt und sich mindestens über die Breite mehrerer der besagten Balken hin erstreckt, auf das besagte Medium, Verfahren, in dem die folgenden Schritte in nachstehender Reihenfolge ausgeführt werden:
— Drucken des besagten Ausrichtungssymbols (5) mit dem besagten Druckkopf (30) auf das besagte Medium (20),
— Bewegen des besagten Mediums (20) und des besagten Wagens (33) zueinander, lotrecht zur Längsrichtung des besagten Ausrichtungssymbols (5),
— Ortung mindestens eines Randes des besagten Symbols mit der Lesevorrichtung,
— Ermittlung eines Korrekturfaktors, beruhend auf dem Abstand zwischen der Druckstelle des besagten Symbols (5) und der Stelle des besagten Symbols, die von der besagten Lesevorrichtung (32) detektiert wurde,
— Bereitstellung der besagten Prüfmittel (40) mit vorgegebenen Mustern balkenkodierter Daten, die auf das besagte Medium (20) aufzudrucken sind,
— Aktivierung der besagten Prüfmittel (40) zum Drucken einer Zeile der vorgegebenen Muster der balken-kodierten Daten (3) auf das besagte Medium (20),
— Positionierung der besagten Ablesevorrichtung (32) mittels des besagten Korrekturfaktors, normalerweise in Nähe der Mittelachse der gerade gedruckten balkenkodierten Daten,
— Lesen der besagten Zeile balkenkodierter Daten (3) mit der besagten Lesevorrichtung (32), und
— Überprüfung der Genauigkeit der gerade gelesenen Zeile balkenkodierter Daten.

2. Verfahren gemäss Anspruch 1, in dem die besagten Bewegungs- und Detektionsschritte eine relative Bewegung zwischen dem besagten Medium (20) und dem besagten Wagen (33) von einer bekannten Ausgangsposition zu einem Punkt enthalten, wo die besagte Lesevorrichtung (32) einen Übergang zwischen dem Hintergrund und dem besagten Ausrichtungssymbol und damit einen ersten Rand des besagten Symbols detektiert und wo diese Detektion dazu benutzt wird, eine erste Messung des Abstandes A zwischen der besagten bekannten Ausgangsposition und dem besagten Symbol (5) zu liefern.

3. Verfahren gemäss Anspruch 2, in dem die besagten Bewegungs- und Detektionsschritte eine weitere relative Bewegung zwischen dem besagten Medium (20) und dem besagten Wagen (33) enthalten, an einen Punkt, an dem die besagte Leseborrichtung (32) einen Übergang zwischen dem Ausrichtungssymbol (5) und dem Hintergrund und damit den zweiten Rand des besagten Symbols detektiert, und wo diese Detektion dazu benutzt wird, eine zweite Messung eines Abstandes B zwischen dem besagten ersten und dem besagten zweiten Rand des besagten Symbols (5) vorzunehmen, und wo die besagte erste und die zweite Messung zur Errechnung des besagten Korrekturfaktors dienen.

4. Verfahren gemäss Anspruch 3, in dem der besagte Bewegungsschritt eine erste relative Bewegung zwischen dem besagten Medium (20) und einer besagten Lesevorrichtung (32) in einer ersten Richtung über einen Weg vorgegebener Länge $\alpha$ enthält, wodurch die besagte Ausgangsposition definiert wird, dann eine zweite relative Bewegung in entgegengesetzter Richtung, in deren Verlauf die besagte erste und zweite Messung der Abstände A und B vorgenommen werden, während die besagten Werte $\alpha$, A und B für die Errechnung des besagten Korrekturfaktors verwendet werden.

5. Verfahren gemäss Anspruch 4, worin die besagten relativen Bewegungen durch Inkremente vorgegebener Länge vollzogen werden (die je nach der Richtung positiv oder negativ sind), wobei das Verfahren den Schritt der Zählung der besagten Inkremente einschliesst und der besagte Wert $\alpha$ die Zahl der Inkremente während der besagten ersten relativen Bewegung bis zum besagten bekannten Ausgangspunkt, der besagte Wert A die Zahl der Inkremente zwischen dem besagten Ausgangspunkt und dem Detektionspunkt des ersten Randes des besagten Symbols (5), und der besagte Wert B die Zahl der Inkremente zwischen dem Detektionspunkt des besagten ersten Randes und dem Detektionspunkt des besagten zweiten Randes des besagten Symbols (5) ist.

6. Verfahren gemäss einem beliebigen der vorangehenden Ansprüche, in dem die besagten Balken gewöhnlich die gleiche Höhe aufweisen und in dem die Dicke des besagten Ausrichtungssymbols mit der Höhe der besagten Balken ziemlich identisch ist.

7. Verfahren gemäss einem der oben genannten Ansprüche, in dem der besagte Bewegungsschritt durch Bewegung des besagten Medium (20) in Bezug auf den besagten Wagen (33) ausgeführt wird.

**Revendications**

1. Méthode de vérification de l'exactitude d'informations (3) en code à barres imprimées sur un support (20) par une imprimante qui comporte une tête d'impression (30) et un dispositif d'analyse (32) montés sur un chariot (33), et des moyens de commande (40), pour imprimer sur ledit support (20) des lignes d'informations (3) en code à barres séparées les unes des autres ainsi qu'un symbole d'alignement (5) de forme allongée qui s'étend parallèlement auxdites lignes sur une distance correspondant à la largeur de quelques unes au moins desdites barres, ladite méthodes comportant les étapes suivantes dans l'ordre indiqué ci-après:

— imprimer ledit sumbole d'alignement (5) sur ledit support (20) au moyen de ladite tête d'impression (30),

— provoquer un déplacement relatif entre ledit support (20) et ledit chariot (33) perpendiculairement à la longueur dudit symbole d'alignement (5),

— détecter la position de l'un au moins des bords dudit symbole au moyen dudit dispositif d'analyse,

— déterminer un facteur de correction qui est fonction de la distance entre la position de l'impression dudit symbole (5) et la position de celui-ci que est détectée par ledit dispositif d'analyse (32),

— fournir auxdits moyens de commande (40) des configurations prédéterminées d'informations en code à barres à imprimer sur ledit support (20),

— mettre en fonction lesdits moyens de commande (40) pour provoquer l'impression desdites configurations prédéterminées d'informations (3) en codes à barres sur ledit support (20),

— positionner ledit dispositif d'analyse (32), en utilisant ledit facteur de correction, à proximité de l'axe central de la ligne d'informations en code à barres qui vient d'être imprimée,

— litre ladite ligne d'informations (3) en code à barres au moyen dudit dispositif d'analyse (32), et

— vérifier l'exactitude de la ligne d'informations en code à barres qui vient d'être lue.

2. Méthode selon la revendication 1, caractérisée en ce que lesdites étapes de déplacement et de détection comportent un déplacement relatif entre ledit support (20) et ledit chariot (33) depuis une position de départ connue jusqu'à un point où ledit dispositif d'analyse (32) détecte une transition entre le fond et ledit symbole d'alignement, détectant ainsi un premier bord dudit symbole, ladite détection permettant d'obtenir une mesure de la distance A entre ladite position de départ connue et ledit symbole (5).

3. Méthode selon la revendication 2, caractérisée en ce que lesdites étapes de déplacement et de détection comportent un déplacement relatif supplémentaire entre ledit support (20) et ledit chariot (33) jusqu'à un point où ledit dispositif d'analyse (32) détecte une transition entre le symbole d'alignement (5) et le fond, détectant ainsi le second bord dudit symbole, ladite détection permettant d'obtenir une mesure de la distance B entre lesdits premier et second bords dudit symbole (5), lesdites mesures étant utilisées aux fins du calcul dudit facteur de correction.

4. Méthode selon la revendication 3, caractérisée en ce que ladite étape de déplacement comporte un premier mouvement relatif entre ledit support (20) et ledit dispositif d'analyse (32) dans une première direction le long d'un chemin de longueur prédéterminée $\alpha$, définissant ainsi ladite position de départ connue, puis un second mouvement relatif dans la direction opposée pendant lequel lesdites mesures des distances A et B sont obtenues,

lesdites valeurs $\alpha$, A et B étant utilisées pour calculer ledit facteur de correction.

5. Méthode selon la revendication 4, caractérisée en ce que lesdits mouvements relatifs sont effectuées par incréments (posifis ou négatifs selon la direction dont il s'agit) de longueur prédéterminée, ladite valeur $\alpha$ représentant le nombre d'incréments pendant ledit premier mouvement relatif jusqu'audit point de départ connu, ladite valeur A représentant le nombre d'incréments entre ledit point de départ connu et le point où le premier bord dudit symbole (5) est détecté, et ladite valeur B représentant le nombre d'incréments entre le point où ledit premier bord est détecté et celui où ledit second bord dudit symbole (5) est détecté.

6. Méthode selon l'une quelconque des revendications précédentes, caractérisée en ce que lesdites barres sont d'une façon générale de même hauteur et l'épaisseur dudit symbole d'alignement est pratiquement égale à la hauteur desdites barres.

7. Méthode selon l'une quelconque des revendications précédentes, caractérisée en ce que ladite étape de déplacement est effectuée en déplaçant ledit support (20) par rapport audit chariot (33).

FIG. 1

FIG. 2

# 0 050 198

FIG. 3a

```
        ┌─────────────────────┐
        │ PRINT ALIGNMENT MARK │
        └─────────────────────┘
                  │
                  ▼
        ┌─────────────────────┐
        │ INCRIMENT SCANNER UP │
        │    ∝ INCRIMENTS      │
        └─────────────────────┘
                  │
                  ▼
        ┌─────────────────────┐
        │  POSITION SCANNER    │
        │     OVER MARK        │
        └─────────────────────┘
                  │
                  ▼
        ┌─────────────────────┐
        │ SET COUNTER TO ZERO  │
        │    (COUNTER A)       │
        └─────────────────────┘
                  │
                  ▼
        ┌─────────────────────┐
        │  INCREMENT SCANNER   │
        │       DOWN           │
        └─────────────────────┘
                  │
                  ▼
        ┌─────────────────────┐
        │    READ SCANNER      │
        └─────────────────────┘
                  │
                  ▼
        ┌─────────────────────┐
        │  INCREMENT COUNTER   │
        └─────────────────────┘
                  │
                  ▼
          Y ◀───◇ COUNT >48 ◇───▶ N
   HALT ◀────           │
                        ▼
                  ◇ SCANNER ◇
             Y ◀──◇  OVER   ◇──▶ N
                  ◇  DARK   ◇
                  │
                  ▼
        ┌─────────────────────┐
        │ SET COUNTER TO ZERO  │
        │     (COUNT B)        │
        └─────────────────────┘
                  │
                  ▼
        ┌─────────────────────┐
        │  INCREMENT SCANNER   │
        │       DOWN           │
        └─────────────────────┘
                  │
                  ▼
        ┌─────────────────────┐
        │    READ SCANNER      │
        └─────────────────────┘
                  │
                  ▼
        ┌─────────────────────┐
        │  INCREMENT COUNTER   │
        └─────────────────────┘
                  │
                  ▼
```

2

0 050 198

FIG. 3b

FIG. 4a

CENTER OVER MARK

SET COUNTER TO ZERO
( COUNT A )

INCREMENT SCANNER
DOWN

READ SCANNER

INCREMENT COUNTER

COUNT >192

HALT ← Y      N →

SCANNER
OVER
DARK

Y      N

SET COUNTER TO ZERO
( COUNT B )

INCREMENT SCANNER
DOWN

READ SCANNER

INCREMENT COUNTER

COUNT >12

HALT ← Y      N →

SCANNER
OVER
LIGHT

Y      N

FIG. 4b